Europäisches Patentamt

European Patent Office

Office européen des brevets

(19)

(11) Veröffentlichungsnummer: **0 270 795**
**B1**

(12) **EUROPÄISCHE PATENTSCHRIFT**

(45) Veröffentlichungstag der Patentschrift: **16.01.91**

(51) Int. Cl.⁵: **C 09 D 109/00**

(21) Anmeldenummer: **87115534.7**

(22) Anmeldetag: **23.10.87**

(54) Verwendung von Bindemitteln in wässrigen Grundieranstrichen.

(30) Priorität: **05.11.86 DE 3637675**

(43) Veröffentlichungstag der Anmeldung:
**15.06.88 Patentblatt 88/24**

(45) Bekanntmachung des Hinweises auf die
Patenterteilung:
**16.01.91 Patentblatt 91/03**

(84) Benannte Vertragsstaaten:
**AT DE ES FR GB IT NL SE**

(56) Entgegenhaltungen:
**EP-A-0 006 113**
**EP-A-0 072 922**
**DE-C-3 428 495**
**FR-A-2 303 053**
**US-A-3 351 675**

(73) Patentinhaber: **BAYER AG**
**D-5090 Leverkusen 1 Bayerwerk (DE)**

(72) Erfinder: **Blum, Harald, Dr.**
**Moorenstrasse 14**
**D-4175 Wachtendonk (DE)**
Erfinder: **Rottscheid, Horst, Dipl.-Ing.**
**Schütenhofstrasse 13**
**D-4150 Krefeld (DE)**

Courier Press, Leamington Spa, England.

**Beschreibung**

Die Erfindung betrifft die Verwendung von wäßrigen Bindemittelzusammensetzungen auf Basis eines wasserverdünnbaren Polybutadienbindemittels und eines nicht wasserlöslichen Phenolharzes in wäßrigen Grundieranstrichen für Oberflächen.

Grundierungsanstriche sollen metallischen und nicht metallischen Werkstücken einen dauerhaften Schutz gegen Verwitterung verleihen. Daher sollen sie Bindemittel enthalten, die eine gute Haftung des Grundierungsanstrichs auf dem Substrat bewirken.

Aus wirtschaftlichen Gründen werden Bindemittel mit möglichst niedrigem Gehalt an flüchtigen, organischen Substanzen eingesetzt, z.B. wäßrige Bindemittel.

Wäßrige Bindemittel für Grundierungsanstriche auf Polybutadienbasis sind bekannt (z.B. DE—A—2 507 809). Zur Erzielung eines widerstandsfähig Films ist bei diesen Bindemitteln entweder ein Einbrennen bei erhöhter Temperatur, gegebenenfalls in Kombination mit einem Vernetzerharz, oder eine längere oxidative Trocknung bei Raumtemperatur erforderlich (z.B. EP—A—29 487). Wird anschließend auf derartige Grundierungsanstriche ein Decklack aufgetragen, so treten häufig Schwierigkeiten in der Zwischenschichthaftung, d.h. in der Haftung zwischen Grundierung und Decklack, auf.

Es wurde nun gefunden, daß wasserverdünnbare, oxidativ vernetzbare Polybutadienbindemittel die mit wasserunlöslichen Phenolharzen, z.B. Alkylphenol-Formaldehyd-Kondensationsprodukten (z.B. nach H. Wagner und H. F. Sarx, "Lackkunstharze", Carl Hanser Verlag, München 1971, Houben-Weyl, "Methoden der organischen Chemie", Band XIV/2, Thieme Verlag, Stuttgart 1963 in D. H. Solomon, "The Chemistry of Organic Film Formers", John Wiley & Sons, Inc., New York, London, Sydney, 1967 und in Kirk-Othmer "Encyclopedia of Chemical Technology", Vol. 15, Interscience Publishers John Wiley & Sons, Inc., New York, Sydney, Toronto, 1968) versetzt werden, eine verbesserte Zwischenschichthaftung.

Die Kombination von Polybutadienbindemitteln mit Phenolharzen in Lacksystemen ist zwar bereits bekannt, jedoch ist dem einschlägigen Stand der Technik keine Empfehlung zu entnehmen, Bindemittelkombinationen aus einem wasserverdünnbaren Polybutadienbindemittel und einem in Wasser nicht löslichen Phenolharz ohne Vorreaktion der Einzelkomponenten in Grundierungsanstrichen für Oberflächen einzusetzen.

Die US—A—3 351 675 beschreibt beispielsweise Bindemittel für die anodische Tauchlackierung, die durch Einbrennen gehärtet werden.

Die hierbei zum Einsatz gelangenden Bindemittel werden durch eine chemische Reaktion zwischen einem maleinisierten Polybutadienharz und einem Phenolharz bei über 200°C (400°F) liegenden Temperaturen hergestellt. Von der Verwendung von Gemischen aus Polybutadienharzen und Phenolharzen in wäßrigen Grundieranstrichen und den damit erzielbaren Vorteilen einer verbesserten Zwischenschichthaftung ist in der Vorveröffentlichung auch nicht andeutungsweise die Rede.

Auch die FR—A—2 303 053 befaßt sich mit Bindemitteln für die anodische Tauchlackierung, wobei ternäre Systeme aus A) einem Polybutadien-Reaktionsprodukt, B) einem maleinisierten Polybutadienharz und C) einem Phenolformaldehydharz zur Anwendung gelangen. Diese Bindemittel sollen ein günstigeres Abscheideverhalten bei der Elektortauchlackierung als Produkte des Standes der Technik aufweisen. Die erfindungsgemäß aufgefundene Möglichkeit, die Zwischenschichthaftung von wäßrigen Grundieranstrichen auf Basis von Polybutadienharzen durch Zusatz lediglich einer weiteren Komponente (Phenolharz) wesentlich zu verbessern, wird in der Vorveröffentlichung nicht angesprochen.

Gemäß EP—A—0006113 sollen Polybutadiene bewirken, daß Polyamidschmelzen auf metallischen Untergründen besser haften, während das Hauptanliegen der vorliegenden Erfindung war, die Zwischenschichthaftung, d.h. die Haftung zwischen Grundierung und Decklack zu verbessern. Im übrigen handelt es sich bei den in dieser Vorveröffentlichung beschriebenen wäßrigen Polybutadienen um nicht-modifizierte Polybutadiene, die mit Hilfe von externen Emulgatoren in Wasser emulgiert werden, d.h. es handelt sich nicht um wasserlösliche Polybutadienharze der erfindungsgemäß als Komponente A) einzusetzenden Art. Die Mitverwendung von Phenolharzen wird in dieser Vorveröffentlichung überhaupt nicht angesprochen.

Gegenstand der Erfindung ist die Verwendung von Bindemitteln, bestehend aus
A) 85 bis 99,5% eines wasserverdünnbaren Polybutadienbindemittels und
B) 0,5 bis 15% eines Phenolharzes,
in wäßrigen Grundieranstrichen für Oberflächen.

Erfindungsgemäß verwendbare wasserverdünnbare Polybutadienbindemittel sind z.B. aus der DE—A—3 428 495 bekannt. Sie enthalten üblicherweise 10 bis 80% Polybutadien, welches ein mittleres Molekulargewicht von 300 bis 10.000 und einer Iodzahl nach Wijs von 200 bis 500 besitzt. Außer Butadienhomopolymerisaten können auch Copolymere des Butadien mit Styrol, (Meth)-acrylnitril, (Meth)-acrylsäureester, Vinyltoluol, Diethylmaleinat, 2,3-Dimethyl-butadien-1,3- Isopren usw. verwendet werden. Weiterhin enthalten die wasserverdünnbaren Polybutadienbindemittel 3 bis 25% ethylenisch ungesättigte Carbonsäuren, Carbonsäureanhydride, wie z.B. (Meth)-acrylsäure, Maleinsäure, Maleinsäureester, Fumarsäure, Fumarsäureester, Maleinsäureanhydrid, Tetrahydrophthalsäureanhydrid usw. sowie 0 bis 50% Pfropfmonomere z.B. Styrol, α-Methylstyrol, Vinyltoluol, (Meth)acrylsäure, (Meth)acrylsäureester, Hydroxyethyl(meth)acrylat, Hydroxypropyl(meth)acrylat, (Meth)acrylnitril, Glycidylmethycrylat, (Meth)-acrylamid, Vinylchlorid usw. und 0 bis 25% Monoalkohole und primäre bzw. sekundäre Amine.

Die Bindemittel werden üblicherweise erhalten durch Erhitzen von Polybutadien und z.B. Maleinsäure-

2

anhydrid (MSA) unter Zusatz von Gelierungsinhibitoren auf 180 bis 200°C. Gegebenenfalls können in einem zweiten Reaktionsschritt ethylenisch ungesättigte Monomere, z.B. Styrol radikalisch oder thermisch aufgepfropft werden. Anschließend wird dann mit einem Amin, z.B. Diethylamin oder einem Alkohol, z.B. n-Butanol, so umgesetzt, daß Carboxylgruppen verbleiben, die dann neutralisiert werden.

Als zweite Bindemittelkomponente können bekannte wasserunlösliche Phenolharze eingesetzt werden, z.B. kolophoniumfreie Kondensationsharze aus substituierten Phenolen und Xylolformaldehydharz wie Tungophen B®.

Um eine gleichmäßige Verteilung des Phenolharzes im wäßrigen Polybutadienbindemittel zu erreichen, kann es vorteilhaft sein, das Phenolharz bei der Herstellung des Polybutadienbindemittels vor dem Lösen des Bindemittels im Wasser in die Harzschmelze einzuarbeiten. Besonders günstig ist das Einarbeiten des Phenolharzes im Anschluß an die Pfropfpolymerisation, entweder vor der Umsetzung mit Aminen oder Alkoholen oder gleichzeitig mit der Ringöffnungsreaktion. Anschließend wird neutralisiert, z.B. mit Alkalihydroxiden, Alkalicarbonaten oder wäßrigem Ammoniak. Es ist auch möglich, das Phenolharz im wäßrigen Polybutadienbindemittel zu dispergieren.

Die erfindungsgemäß zu verwendenden wäßrigen Bindemittel können mit üblichen Pigmenten wie Eisenoxid, Bleioxid, Strontiumchromat, Zinkoxid, Zinkphosphat, Titandioxid und organischen Pigmenten versetzt werden.

Weiterhin können sie mit üblichen Zusatzstoffen wie Antioxidantien, Netzmitteln, Trocknungsmitteln, Antischaummitteln, Verlaufsmittel usw. versetzt werden.

Bevorzugte Trocknungsmittel sind die Naphtenate, Resinate, Oleate, Linoleate, Octoate und Maleinate der Metalle Kobalt, Mangan, Chrom, Zirkonium, Eisen, Zink, Aluminium und Calcium.

Das Auftragen der aus den erfindungsgemäß zu verwendenden Bindemitteln hergestellten Lacke geschieht nach üblichen Verfahren, wie Spritzen, Tauchen, Gießen, Walzen, Streichen usw.

Die erfindungsgemäß zu verwendenden Bindemittel ergeben lagerstabile Grundierungslacke mit guten lacktechnischen Eigenschaften und deutlich verbesserter Zwischenschichthaftung beim Überlackieren mit Decklacken.

## Beispiele

Bei den Beispielen wurde als Decklack ein in einem organischem Lösungsmittel gelöstes, mittelöliges Alkydharz auf Basis trockenender pflanzlicher Fettsäuren (Alkydal F 48®) verwendet.

Alle Angaben über Teile und Prozente beziehen sich auf das Gewicht.

## Herstellung der Bindemittel

### Vergleichsbeispiel

In einem mit Stickstoffeinleitungsrohr, Rührer sowie Kühl- bzw. Heizvorrichtung versehenen 4-l-Glaskolben werden 1.843 g Polybutadienöl mit einem Molekulargewicht von ca. 1.800, einer Viskosität von ca. 750 mPa.s (20°C) und ca. 99% 1,4-cis bzw, 1,4-trans Verknüpfung eingewogen und nach Zugabe von 356 g Maleinsäureanhydrid, 0,9 g Kupfernaphtenat und 0,9 g Acetylaceton unter Durchleiten eines schwachen Stickstoffatoms auf 190 bis 200°C aufgeheizt und 6 Stunden bei dieser Temperatur gehalten. Man erhält ein viskoses Öl mit einer Gesamtsäurezahl von 160. Nach Abkühlen auf 140°C werden 559 g Styrol, 6,4 g n-Dodecylmercaptan und 2,3 g Di-tert.-butylperoxid zugegeben und der Ansatz bei 140°C gerührt, bis eine Viskosität entsprechend einer Auslaufzeit nach DIN 53 211 von 52 sec., gemessen 50 %ig in Styrol im DIN-4-mm-Becher, erreicht wird. Nach dem Abkühlen der Harzschmelze auf 100°C werden 130 g Diethylamin während 2 Stunden zum Basispfropfpolymerisat zugetropft und die Mischung noch 2 Stunden bei 100°C gerührt. 2.500 g dieser Harzschmelze werden unter Rühren in eine auf 40°C erwärmte Mischung aus 5.500 g entionisiertem Wasser, 136 g 30 %iger, wäßriger Ammoniaklösung, 27,3 g Triethylamin und 37,2 g Butanonoxim dispergiert. Man erhält eine feinteilige Dispersion mit einer Säurezahl von 21,0 und einen Festgehalt von 30,4%.

### Beispiel

In einem mit Stickstoffeinleitungsrohr, Rührer sowie Kühl- bzw. Heizvorrichtung versehenen 4-l-Glaskolben werden 1.843 g Polybutadienöl mit einem Molekulargewicht von ca. 1.800, einer Viskosität von ca. 750 mPa.s (20°C) und ca. 99% 1,4-cis bzw. 1,4-trans Verknüpfung eingewogen und nach Zugabe von 356 g Maleinsäureanhydrid, 0,9 g Kupfernaphtenat und 0,9 g Acetylaceton unter Durchleiten eines schwachen Stickstoffstromes auf 190 bis 200°C aufgeheizt und 6 Stunden bei dieser Temperatur gehalten. Man erhält ein viskoses Öl mit einer Gesamtsäurezahl von 160.

Nach Abkühlen auf 140°C werden 559 g Styrol, 6,4 g Dodecylmercaptan und 2,3 g Di-tert.-butylperoxid zugegeben und der Ansatz bei 140°C gerührt, bis eine Viskosität entsprechend einer Auslaufzeit nach DIN 53 211 von 52 sec, gemessen 50 %ig in Styrol im DIN-4-mm-Becher, erreicht wird. Bei 140°C werden dann 120,5 g Tungophen B® (100 %iges Phenol-Formaldehydharz, Erweichungspunkt nach DIN 53 180 110 bis 120°C, Viskosität nach DIN 53 015 50 %ig in Xylol 750 mPa.s (23°C), Säurezahl nach DIN 53 402 ca. 15) zugegeben und der Ansatz in einer Stunde auf 100°C abgekühlt. Anschließend werden 130 g Diethylamin während 2 Stunden zugetropft und die Harzschmelze noch 2 Stunden bei 100°C gerührt. Die Gesamtsäurezahl wird dann mit 63 bestimmt. 2.500 g dieser Harzschmelze werden in eine auf 40°C erwärmte Mischung aus 5.160 g entionisiertem Wasser, 135 g 30 %iger, wäßriger Ammoniaklösung, 27,3 g Triethylamin und 37,2 g Butanonoxim dispergiert. Man erhält eine feinteilige Dispersion mit einer Säurezahl von 20,0 und einem Festgehalt von 31,8%.

Herstellung von Grundierungslacken

Die Herstellung der zinkoxid- bzw. zinkphosphathaltigen Korrosionsschutzgrundierungen erfolgte in der üblichen Weise:

Die Bindemitteldispersion gemäß Vergleich bzw. Beispiel, wird in einem Mischbehälter vorgelegt und unter schnellem Rühren werden die Pigmente und Zusatzstoffe langsam zugegeben und eingerührt. Dieses vordispergierte Mahlgut wird anschließend auf einer Perlmühle bei ca. 2.400 Upm angerieben. Der fertige Lack wird 24 Stunden nach dem Anreiben mit Wasser auf eine Spritzviskosität entsprechend einer Auslaufzeit von 30 sec, gemessen im DIN-6-mm-Becher, eingestellt. Alle Lacke wurden auf den pH-Wert 9 eingestellt.

| Anreiberezeptur (Mengen in g) | Vergleich | Beispiel |
|---|---|---|
| Bindemitteldispersion | 330 | 314,5 |
| Kobalt-Sikkativ (Metallgehalt 8%) | 0,75 | 0,75 |
| Eisenoxid | 58,4 | 58,4 |
| Mikrotalk | 28,6 | 28,6 |
| Antischaummittel | 1,1 | 1,1 |
| Zinkphosphat | 58,9 | 58,9 |
| Zinkoxid | 5,9 | 5,9 |
| Lithophone | 58,7 | 58,7 |
| Mahlgut | 542,35 | 526,85 |
| + Wasser für Spritzviskosität 31″ | 30,3 | 68,0 |
| Lackfestkörper | 51,5% | 50,9% |

Die aus dem erfindungsgemäßen Bindemittel bzw. aus dem Vergleichsbindemittel hergestellten Lacke wurden auf entfettete Karosseriebleche gespritzt und zunächst ohne Decklack geprüft. Dabei wurden folgende Ergebnisse erhalten:

|  | Vergleich | Beispiel |
|---|---|---|
| Klebfreitrocknung bei Raumtemperatur (35 µm) | 30" | 30" |
| Pendelhärte nach König | | |
| nach 16 Stunden | 36' | 34' |
| 4 Wochen | 113' | 109' |
| Haftung der Grundierung auf dem Stahlblech (Gitterschnitt-test nach DIN 53 151) | | |
| nach 1 Woche | 0 | 0 |
| 4 Wochen | 0—1 | 0 |
| Wasserlagerung nach 16 Stunden Trocknung bei Raumtemperatur | | |
| 8 Stunden | Blasen $m_1/g_{1-2}$ | ohne Befund |
| 24 Stunden | etwas ausge-bleicht | Spur ausge-bleicht |

Die Beurteilung der auftretenden Blasen erfolgt nach DIN 53 203. Dabei wird die Menge der Blasen m von 0 bis 5 und die Größe der Blasen g von 0 bis 5 bewertet.
0 = günstigster Wert, 5 = ungünstigster Wert

Zur Prüfung der Zwischenschichthaftung wurden die Grundierungen mit einem Decklack überspritzt und nach 7 Tagen bei Raumtemperatur dem Tropen- bzw. Schwitzwassertest nach DIN 50 017 unterworfen. Da die Zwischenschichthaftung auch vom Alter der Grundierung, d.h. von der Zeitspanne zwischen dem Auftragen der Grundierung und dem Überspritzen mit dem Decklack abhängt, wurde die Grundierung jeweils nach 6, 16, 24 und 48 Stunden Trocknung bei Raumtemperatur mit dem Decklack versehen.
Als Decklack wurde ein in Testbenzin/Xylol gelöstes, mittelöliges Alkydharz auf Basis trocknender pflanzlicher Fettsäuren (Alkydal F48® von Bayer), angerieben als Weißlack mit Titandioxid, verwendet. Das Pigment: Bindemittelverhältnis betrug 0,65:1.

Der Tropen- bzw. Schwitzwassertest erbrachte folgende Ergebnisse:

|  | Vergleich | Beispiel |
|---|---|---|
| Gesamtschichtstärke | 95—100 µm | 95—100 µm |
| Decklackauftrag nach 6 Stunden Schwitzwassertest | | |
| 48 h | Blasen $m_2/g_2$ | ohne Befund |
| 120 h | Blasen $m_{2-3}/g_{2-3}$ | ohne Befund |
| Decklackauftrag nach 16 Stunden Schwitzwassertest | | |
| 48 h | Blasen $m_3/g_2$ | ohne Befund |
| 120 h | Blasen $m_4/g_{2-3}$ | ohne Befund |
| Decklackauftrag nach 24 Stunden Schwitzwassertest | | |
| 48 h | Blasen $m_3/g_2$ | ohne Befund |
| 120 h | Blasen $m_5/g_{2-3}$ | ohne Befund |
| Decklackauftrag nach 48 Stunden Schwitzwassertest | | |
| 48 h | Blasen $m_2/g_2$ | ohne Befund |
| 120 h | Blasen $m_3/g_3$ | ohne Befund |

# EP 0 270 795 B1

Das erfindungsgemäße Bindemittel zeigt eine deutlich bessere Zwischenschichthaftung; beim Schwitzwassertest wurde im Gegensatz zum Vergleich keine Blasenbildung durch Unterwanderung des Decklackes und eine einwandfreie Decklackhaftung beobachtet.

## Patentansprüche

1. Verwendung von Bindemitteln, bestehend aus
A) 85 bis 99,5% eines wasserverdünnbaren Polybutadienbindemittels und
B) 0,5 bis bis 15% eines Phenolharzes,
in wäßrigen Grundieranstrichen für Oberflächen.

2. Verwendung gemäß Anspruch 1, dadurch gekennzeichnet, daß als Phenolharz ein Kondensationsprodukt aus substituierten Phenolen und Xylolformaldehydharz verwendet wird.

3. Verwendung gemäß Anspruch 1 und 2, dadurch gekennzeichnet, daß das Phenolharz bei der Herstellung des Polybutadienbindemittels eingearbeitet wird, bevor das Bindemittel in Wasser gelöst wird.

## Revendications

1. Utilisation de liants constitués de
A) 85 à 99,5% d'un reliant polybutadiénique pouvant être dilué à l'eau et
B) de 0,5 à 15% d'une résine phénolique,
dans des peintures aqueuses d'apprêt pour surfaces.

2. Utilisation suivant la revendication 1, caractérisée en ce que la résine phénolique que l'on utilise est un produit de condensation de phénols substitués et d'une résine xylène-formaldéhyde.

3. Utilisation suivant les revendications 1 et 2, caractérisée en ce que la résine phénolique est incorporée au cours de la préparation du liant polybutadiénique, avant que le liant ne soit dissous dans l'eau.

## Claims

1. The use of binders consisting of
A) 85 to 99.5% of a water-dilutable polybutadiene binder and
B) 0.5 to 15% of a phenolic resin
in water-based primers for surfaces.

2. The use claimed in claim 1, characterized in that a condensation product of substituted phenols and xylene formaldehyde resin is used.

3. The use claimed in claims 1 and 2, characterized in that the phenolic resin is incorporated during the production of the butadiene binder before the binder is dissolved in water.